# EUROPÄISCHE PATENTSCHRIFT

(11) **EP 1 205 502 B1**
(45) Veröffentlichungstag und Bekanntmachung des Hinweises auf die Patenterteilung: **17.08.2005**
(21) Anmeldenummer: 01124107.2
(22) Anmeldetag: 10.10.2001
(51) Int. Cl.: C08G 18/38, C08K 5/3432, C08J 9/00

(54) **Polyisocyanat-Polyadditionsprodukte enthaltend zyklische Iminoester**
Polyisocyanate polyaddition products containing cyclic imino esters
Composés de polyaddition de polyisocyanates contenant des imino esters cycliques

(30) Priorität: 14.11.2000 DE 10056376
(43) Veröffentlichungstag der Anmeldung: 15.05.2002
(73) Patentinhaber: BASF AKTIENGESELLSCHAFT, 67056 Ludwigshafen (DE)
(72) Erfinder: Rodewald, Dieter, Dr., 49152 Bad Essen (DE); Tesch, Helmut, Dr., 49152 Bad Essen (DE); Arlt, Andreas, 49457 Drebber (DE)

(56) Entgegenhaltungen:
- GB-A- 2 193 504
- US-A- 4 446 262
- US-A- 5 408 002

## Beschreibung

Die Erfindung bezieht sich auf Polyurethanweichschaumstoffe mit einer Dichte von 15 bis 150 kg/m³, bevorzugt 20 bis 100 kg/m³ enthaltend zyklische Iminoester, insbesondere Matratzen oder Polsterungen für Möbel, Automobilsitze und -lehnen oder Teppiche enthaltend zyklische Iminoester. Des weiteren bezieht sich die Erfindung auf Verfahren zur Herstellung von Polyurethanweichschaumstoffen mit einer Dichte von 15 bis 150 kg/m³ durch Umsetzung von Isocyanaten mit gegenüber Isocyanaten reaktiven Verbindungen in Gegenwart von Treibmitteln und gegebenenfalls Katalysatoren, Zusatzstoffen und/oder Hilfsmitteln sowie die Verwendung von zyklischen Iminoestern in Polyurethanschaumstoffen zur Umsetzung mit primären Aminen.

Die Herstellung von Polyisocyanat-Polyadditionsprodukten, beispielsweise Polyurethanen, durch Umsetzung von Polyisocyanaten mit gegenüber Isocyanaten reaktiven Verbindungen in Anwesenheit von Treibmitteln und gegebenenfalls Katalysatoren, die die Reaktion der gegenüber Isocyanaten reaktiven Stoffe mit Isocyanaten beschleunigen, Zusatzstoffen und/oder Hilfsmitteln ist allgemein bekannt.

Wie auch andere Kunststoffe sind Polyisocyanat-Polyadditionsprodukte Alterungsprozessen unterworfen, die im allgemeinen mit zunehmender Zeit zu einer Verschlechterung der Gebrauchseigenschaften führen. Wesentliche Alterungseinflüsse sind beispielsweise Hydrolyse, Photooxidation und Thermooxidation, die zu Bindungsbrüchen in den Polymerketten führen. Bei Polyisocyanat-Polyadditionsprodukten, beispielsweise Polyurethanen, im Folgenden auch als PUR bezeichnet, hat speziell die Einwirkung von Feuchtigkeit und noch verstärkt die Kombination von Feuchtigkeit und erhöhter Temperatur eine hydrolytische Spaltung der Urethan- und Harnstoffbindungen zur Folge.

Diese Spaltung äußert sich nicht nur in einer signifikanten Verschlechterung der Gebrauchseigenschaften, sondern führt auch zur Bildung von primären aromatischen Aminen wie z.B. Toluylendiamin (TDA) und Diaminodiphenylmethan (MDA) oder primären aliphatischen Aminen wie beispielsweise Hexamethylendiamin oder Isophorondiamin.

Wie in Versuchen festgestellt wurde, wird die Aminbildung von einer Reihe von Parametern beeinflußt. Insbesondere hohe Temperaturen ab 80 °C in Kombination mit hoher Luftfeuchtigkeit führen zur hydrolytischen Spaltung der Urethan- und Harnstoffbindungen. Derartige Bedingungen sind für einige spezielle Anwendungsgebiete von PUR-Weichschaumstoffen von Bedeutung.

DE-A 42 32 420 offenbart die Verwendung von α,β-ungesättigten Estercarboxylaten zur Herstellung von Polyurethanschaumstoffen, die eine verbesserte Stauchhärte und Reißdehnung aufweisen. Salze von α,β-ungesättigten Estercarboxylaten werden hierin als Katalysatoren für die NCO/Wasser-Reaktion verwendet. In einem Nebensatz wird beschrieben, daß die Verbindungen aufgrund des Vorliegens von olefinischen Doppelbindungen in Nachbarschaft zu den Carboxylatgruppen zur Addition von Aminogruppen, die während der langsamen Schaumalterung entstehen, befähigt sind. Nachteilig an diesen Verbindungen ist ihre katalytische Wirkung, die zu einer Beeinträchtigung der Schäumreaktion führt. Die katalytische Wirkung von Additiven zur Reduzierung der Amingehalte in fertigen PUR-Schäumen ist jedoch nicht erwünscht, da auch die Rückspaltung der Urethan- und Harnstoffbindungen, besonders unter hydrolytischen Bedingungen und erhöhter Temperatur, beschleunigt wird, was zu einer weiteren und beschleunigten Bildung primärer Amine führt.

DE-A 197 10 978 beschreibt Lactone in Kombination mit carbodiimidhaltigen Verbindungen als Stabilisatoren gegen hydrolytische Alterungserscheinungen in halbharten kompakten und/oder zelligen Polyurethanformteilen. Der Zusatz der Wirkstoffkombinationen aus Carbodiimid und Lacton führt zu einem wesentlich geringeren Abfall der Zugfestigkeit der Produkte nach Feucht-Wärmelagerung, verglichen zu einem Produkt ohne Zusatz dieser Kombination. Nachteilig an diesen Zusätzen ist, daß die Lactone nur dann als Hydrolyseschutzmittel wirken, wenn sie in Kombination mit Carbodiimiden, die schon lange als Hydrolyseschutzmittel für Polyesterurethane beschrieben wurden, eingesetzt werden. Zusätzlich wird ihre Wirksamkeit lediglich in halbharten Polyurethanen beschrieben.

In GB 2193504 und US 4757095 werden Lactone und Lactame als Zusätze für Prepolymere, die zur Herstellung von mikrozellulären Polyurethanschaumstoffen für Schuhsohlen verwendet werden, offenbart. Die Lactone und Lactame bewirken eine verbesserte Kälteflexibilität der resultierenden Elastomere, indem sie zu einer Gefrierpunktserniedrigung der Prepolymere auf 0 °C führen. Auf eine Verbesserung der Langzeitstabilität, bzw. des Hydrolyseschutzes der Polyurethanelastomere wird in diesem Patent nicht eingegangen. Dasselbe gilt für die US 4234445 und US 4195148, in denen Lactone als nichtflüchtige Zusätze zur Verringerung der Viskosität von Polyurethan-Prepolymeren zur Herstellung von gesprühten Polyurethanen beschrieben werden. Zum selben Zweck werden Caprolacton sowie cyclische Carbonate in EP-A 276 452 zur Herstellung von Hartschaumstoffen verwendet. Neben der verbesserten Verarbeitbarkeit des Prepolymers weisen die daraus hergestellten Polyurethanschaumstoffe eine Reihe weiterer Vorteile wie z.B. verbesserte Dimensionstabilität und erhöhter Flammschutz auf. Allerdings beschränkt sich die Wirksamkeit auf Prepolymere aus aromatischen Polyesterpolyolen. Auch in diesem Patent wird nicht auf eine verbesserte Hydrolysestabilität oder gar der Verminderung des Gehaltes an Aminen eingegangen.

In der WO 89/05830 werden u.a. Lactone als Baustein zur Synthese von Polyesterpolyolen, die in Prepolymeren für biologisch abbaubare, kompakte Polyurethane eingesetzt werden, beschrieben.

Aufgabe der vorliegenden Erfindung war es, den Gehalt an primären, bevorzugt primären aromatischen Aminen insbesondere in PUR-Weichschaumstoffen bevorzugt mit einer Dichte von 15 bis 150 kg/m³, besonders bevorzugt 20 bis 100 kg/m³ zu reduzieren.

Diese Aufgabe konnte durch Polyurethanweichschaumstoffe mit einer Dichte von 15 bis 150 kg/m³ enthaltend zyklische Iminoester gelöst werden.

Unter dem Begriff "zyklische Iminoester", die in dieser Schrift auch als "Oxazinone" bezeichnet werden, sind Verbindungen zu verstehen, die die folgende allgemeine Struktureinheit (I) aufweisen:

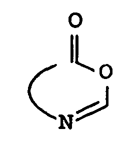

Bevorzugt weisen die zyklischen Iminoester eine der folgenden Strukturen (II) und/oder (III) auf: 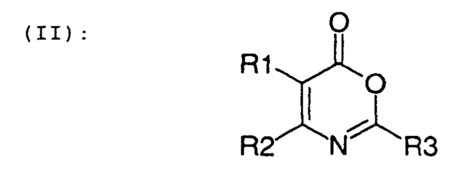 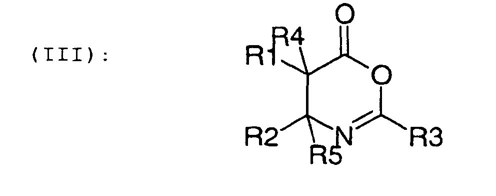 wobei R1, R2, R3, R4 und R5 unabhängig voneinander die folgende Bedeutung aufweisen können: Alkylrest mit 1 bis 15 Kohlenstoffatomen, Arylrest mit 4 bis 18 Kohlenstoffatomen, Halogenalkylrest mit 1 bis 15 Kohlenstoffatomen, Wasserstoff, wobei im Falle der Struktureinheit (I) die Reste R1 und R2 gemeinsam ein gegebenenfalls substituiertes aromatische System bilden können.

Diese Struktureinheit kann gegebenenfalls in komplexeren Verbindungen vorliegen. Beispielsweise können als zyklische Iminoester folgende Verbindungen eingesetzt werden: 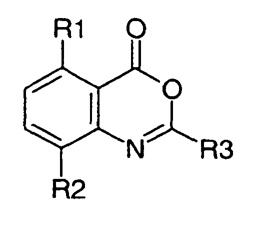 wobei R1, R2 und R3 unabhängig voneinander die folgende Bedeutung aufweisen können: Alkylrest mit 1 bis 15 Kohlenstoffatomen, Arylrest mit 6 bis 18 Kohlenstoffatomen, Halogenalkylrest mit 1 bis 15 Kohlenstoffatomen, Wasserstoff.

Bevorzugt werden als zyklische Iminoester Benzoxazinonderivate, wie z.B. 2-Phenyl-4H-3,1-Benzoxazin-4-on, 2-Methyl-4H-3,1-Benzoxazin-4-on und/oder 5-Chlor-2- Phenyl-4H-3,1-Benzoxazin-4-on eingesetzt.

Zyklische Iminoester werden beschrieben in den Schriften:
- Journal of Polymer Science: Part A: Polymer Chemistry, Vol. 31, S. 1579 ff., 1993
- Journal of Polymer Science: Part A: Polymer Chemistry, Vol. 31, S. 817 ff., 1993
- Jahresbericht 1998 des Instituts für Polymerforschung Dresden e.V. (siehe insbesondere Verbindung 10 auf der Seite 10 sowie dessen Herstellung auf der Seite 14 ff.)
- DE-A 198 12 409, insbesondere Beispiele 1 und 2
- US 3 408 326, insbesondere die Produkte der Beispiele 1 bis 6 sowie die im Beispiel 13 dargestellten Verbindungen.

Die erfindungsgemäßen zyklischen Iminoester werden bevorzugt in einer Mengen von 0,01 bis 5 Gew.-%, bezogen auf das Gewicht des Polyisocyanat-Polyadditionsprodukts eingesetzt. Das Gewicht der Polyisocyanat-Polyadditionsprodukte beinhaltet das Gewicht der zyklischen Iminoester.

Erfindungsgemäß werden die zyklischen Iminoester verwendet in Polyurethanweichschaumstoffen mit einer Dichte von 15 bis 150, besonders bevorzugt 20 bis 100 kg/m³, insbesondere in Matratzen oder Polsterungen für Möbel, Automobilsitze und -lehnen oder Teppiche auf der Basis von Polyurethanweichschaumstoffen.

Der Zusatz der zyklischen Iminoester in PUR-Schaumrezepturen führt überraschend zu deutlich reduzierten Gehalten an primären Aminen. Als erfindungsgemäße Verbindungen zur Reduzierung des Gehaltes an primären Aminen in Polyurethanprodukten wurden demnach zyklische Iminoester gefunden. Es gibt verschiedene Mechanismen, die zu dieser Reduzierung beitragen können. Aus der Literatur ist die Umsetzung von zyklischen Iminoestern mit Aminen bekannt. Zusätzlich führt die durch Hydrolyse der zyklischen Iminoester entstehende Carbonsäure zur Protonierung des tertiären N-Atoms in Aminkatalysatoren. Durch die Blockierung des katalytisch aktiven N-Atoms unter Ausbildung eines quartären N-Atoms verliert der Aminkatalysator seine katalytische Aktivität bezüglich der hydrolytischen Rückspaltung von Urethan- und Harnstoffbindungen. Dadurch wird einer Verschlechterung der mechanischen Eigenschaften der Polyisocyanat-Polyadditionsprodukte, insbesondere der Weichschaumstoffe, insbesondere unter feucht-warmer Belastung, als auch der Bildung von primären Aminen, insbesondere primären aromatischen Aminen, beispielsweise 2,2'-, 2,4', und/oder 4,4'-MDA und/oder 2,4- und/oder 2,6-TDA entgegengewirkt. Durch den Zusatz der zyklischen Iminoester wird die Hydrolyse von Urethan- und Harnstoffbindungen auf zweierlei Weise vermindert, wie erwähnt durch die Deaktivierung der vorhandenen Aminkatalysatoren aber auch dadurch, daß ein Großteil des eindringenden Wassers bereits für die Hydrolyse der zugesetzten zyklischen Iminoester verbraucht wird und für die Spaltung von Urethan- und Harnstoffbindungen nicht mehr zur Verfügung steht. Zum anderen sind die zyklischen Iminoester jedoch auch zur Reaktion mit bereits gebildetem primären Amin zu Hydroxy- bzw. Aminocarbonsäureamiden befähigt.

Durch den Zusatz der erfindungsgemäßen zyklischen Iminoester kann die Diffusion bzw. Migration von primären Aminen aus den Polyurethanprodukten vermindert werden, indem die primären Amine umgesetzt werden. Durch das höhere Molekulargewicht der Umsetzungsprodukte wird die Diffusion, bzw. Migration aus der Polyurethanmatrix vermindert, so daß das Foggingverhalten verbessert wird.

Zyklische Iminoester bewirken nach deren Hydrolyse außerdem eine Verbesserung des Foggingverhaltens von Polyurethanprodukten, indem die Diffusion der verwendeten tertiären Aminkatalysatoren durch deren Protonierung verhindert wird.

Die erfindungsgemäßen zyklischen Iminoester werden in den allgemein bekannten Verfahren zur Herstellung der Polyurethanweichschaumstoffe mit einer Dichte von 15 bis 150 kg/m³, besonders bevorzugt 20 bis 100 kg/m³, insbesondere Matratzen und/oder Polsterungen für Möbel bzw. Teppiche, Automobilsitze und -lehnen, insbesondere Krankenhausmatratzen eingesetzt. Erfindungsgegenstand sind demnach auch Verfahren zur Herstellung von Polyurethanweichschaumstoffen mit einer Dichte von 15 bis 150 kg/m³, besonders bevorzugt 20 bis 100 kg/m³, durch Umsetzung von Isocyanaten mit gegenüber Isocyanaten reaktiven Verbindungen in Gegenwart von Treibmitteln und gegebenenfalls Katalysatoren, Zusatzstoffen und/oder Hilfsmitteln, wobei man die Umsetzung in Gegenwart von zyklischen Iminoester durchführt. Die Herstellung von Polyisocyanat-Polyadditionsprodukten, beispielsweise Polyurethanweichschaumstoffen ist allgemein bekannt und in der Fachliteratur vielfältig beschrieben.

Die Produkte, d.h. insbesondere die Polsterungen für Möbel und/oder Teppiche bzw. die Matratzen werden zunehmend zur Reinigung bzw. Desinfektion mit heißem Dampf behandelt, womit gerade bei diesen Produkten die erfindungsgemäßen Vorteile besonders ausgeprägt sind.

Die weiteren Ausgangsstoffe für die Herstellung der Polyisocyanat-Polyadditionsprodukte werden nachfolgend beispielhaft beschrieben.

Als Isocyanate können die an sich bekannten aliphatischen, cycloaliphatischen, araliphatischen und vorzugsweise aromatischen organischen Isocyanate, bevorzugt mehrfunktionelle, besonders bevorzugt Diisocyanate, eingesetzt werden.

Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, aromatische Di-und Polyisocyanate, wie z.B. 2,4- und 2,6-Toluylen-diisocyanat (TDI) und die entsprechenden Isomerengemische, 4,4'-, 2,4'- und 2,2'-Diphenylmethan-diisocyanat (MDI) und die entsprechenden Isomerengemische, Naphthalin-1,5-diisocyanat (NDI), Mischungen aus 4,4'- und 2,4'-Diphenylmethan-diisocyanaten, Mischungen aus NDI und 4,4'- und/oder 2,4'-Diphenylmethan-diisocyanaten, 3,3'-Dimethyl-4,4'-diisocyanatodiphenyl (TODI), Mischungen aus TODI und 4,4'- und/oder 2,4'-Diphenylmethan-diisocyanaten, Polyphenyl-polymethylen-polyisocyanate, Mischungen aus 4,4'-, 2,4'-und 2,2'-Diphenylmethan-diisocyanaten und Polyphenylpolymethylenpolyisocyanaten (Roh-MDI) und Mischungen aus Roh-MDI und Toluylen-diisocyanaten. Die organischen Di- und Polyisocyanate können einzeln oder in Form ihrer Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, modifiziertes 4,4'-Diphenylmethan-diisocyanat, modifizierte 4,4'- und 2,4'-Diphenylmethan-diisocyanatmischungen, modifiziertes NDI, modifiziertes TODI, modifiziertes Roh-MDI und/oder 2,4- bzw. 2,6-Toluylen-diisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen-und Polyoxypropylen-polyoxyethylen-glykole, -triole und/oder -tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus beispielsweise Polyester- und/oder vorzugsweise Polyetherpolyolen und 4,4'-Diphenylmethan-diisocyanat, Mischungen aus 2,4'- und 4,4'-Diphenylmethan-diisocyanat, NDI, TODI, Mischungen aus NDI und Isomeren des MDI, 2,4- und/oder 2,6-Toluylen-diisocyanaten oder Roh-MDI. Bewährt haben sich ferner flüssige, Carbodiimidgruppen und/oder Isocyanuratringe enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'-und/oder 2,2'-Diphenylmethan-diisocyanat, NDI, TODI und/oder 2,4-und/oder 2,6-Toluylen-diisocyanat.

Die modifizierten Polyisocyanate können miteinander oder mit unmodifizierten organischen Polyisocyanaten wie z.B. 2,4'-, 4,4'-Diphenyl-methan-diisocyanat, NDI, TODI, Roh-MDI, 2,4- und/oder 2,6-Toluylen-diisocyanat gegebenenfalls gemischt werden.

Bevorzugt werden als Isocyanate in den erfindungsgemäßen Mischungen bzw. Verfahren 4,4'-, 2,4'- und/oder 2,2'-Diphenylmethandiisocyanat, 2,4- und/oder 2,6-Toluylendiisocyanat, NDI, Hexamethylendiisocyanat und/oder Isophorondiisocyanat eingesetzt, wobei diese Isocyanate sowohl in beliebigen Mischungen als auch wie bereits beschrieben modifiziert eingesetzt werden können.

Als gegenüber Isocyanaten reaktive Verbindungen mit üblicherweise mindestens zwei reaktiven Wasserstoffatomen, üblicherweise Hydroxyl- und/oder Aminogruppen, werden zweckmäßigerweise solche mit einer Funktionalität von 2 bis 8, vorzugsweise 2 bis 6, und einem Molekulargewicht von üblicherweise 60 bis 10000, verwendet. Bewährt haben sich z.B. Polyether-polyamine und/oder vorzugsweise Polyole ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole, die nach bekannten Verfahren hergestellt werden können.

Die Polyester-polyole besitzen vorzugsweise eine Funktionalität von 2 bis 4, insbesondere 2 bis 3, und ein Molekulargewicht von üblicherweise 500 bis 3000, vorzugsweise 1200 bis 3000 und insbesondere 1800 bis 2500.

Die Polyether-polyole, besitzen eine Funktionalität von vorzugsweise 2 bis 6 und üblicherweise Molekulargewichte von 500 bis 8000.

Als Polyether-polyole eignen sich beispielsweise auch polymermodifizierte Polyether-polyole, vorzugsweise Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril hergestellt werden können.

Die Polyether-polyole können ebenso wie die Polyester-polyole einzeln oder in Form von Mischungen verwendet werden. Ferner können sie mit den Pfropf-polyether-polyolen oder Polyester-polyolen sowie hydroxylgruppenhaltigen Polyesteramiden, Polyacetalen und/oder Polycarbonaten gemischt werden.

Als Polyolkomponenten werden dabei für Polyurethanhartschaumstoffe, die gegebenenfalls Isocyanuratstrukturen aufweisen können, insbesondere hochfunktionelle Polyole, insbesondere Polyetherpolyole auf Basis hochfunktioneller Alkohole, Zuckeralkohole und/oder Saccharide als Startermoleküle, für flexible Schäume insbesondere 2- und/oder 3-funktionelle Polyether- und/oder Polyesterpolyole auf Basis Glyzerin und/oder Trimethylolpropan und/oder Glykolen als Startermoleküle bzw. zu veresternde Alkohole eingesetzt. Die Herstellung der Polyetherpolyole erfolgt dabei nach einer bekannten Technologie. Geeignete Alkylenoxide zur Herstellung der Polyole sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Zur Herstellung von thermoplastischen Polyurethanen verwendet man bevorzugt Polyole mit einer Funktionalität von 2 bis 2,2 und keine Vernetzungsmittel.

Als gegenüber Isocyanaten reaktive Verbindungen können des weiteren Kettenverlängerungs- und/oder Vernetzungsmittel verwendet werden. Beispielsweise zur Modifizierung der mechanischen Eigenschaften der mit diesen Substanzen hergestellten Polyisocyanat-Polyadditionsprodukte, z.B. der Härte, kann sich der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel können Wasser, Aminoalkohole, Diole und/oder Triole mit Molekulargewichten von 60 bis <500, vorzugsweise von 60 bis 300 verwendet werden. In Betracht kommen beispielsweise Diethanolamin und/oder Triethanolamin und/oder auch aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und Diolen und/oder Triolen als Startermoleküle.

Sofern zur Herstellung der Polyisocyanat-Polyadditionsprodukte Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der gegenüber den Isocyanaten reaktiven Verbindungen zum Einsatz, wobei thermoplastische Polyurethane bevorzugt ohne Vernetzungsmittel hergestellt werden.

Als Katalysatoren kommen allgemein übliche Verbindungen in Betracht, beispielsweise organische Amine, beispielsweise Triethylamin, Triethylendiamin, Tributylamin, Dimethylbenzylamin, N,N,N',N'-Tetramethylethylendiamin, N,N,N',N'-Tetramethyl-butandiamin, N,N,N',N'-Tetramethyl-hexan-1,6-diamin, Dimethylcyclohexylamin, Pentamethyldipropylentriamin, Pentamethyldiethylentriamin, 3-Methyl-6-dimethylamino-3-azapentol, Dimethylaminopropylamin, 1,3-Bisdimethylaminobutan, Bis-(2-dimethylaminoethyl)-ether, N-Ethylmorpholin, N-Methylmorpholin, N-Cyclohexylmorpholin, 2-Dimethylamino-ethoxy-ethanol, Dimethylethanolamin, Tetramethylhexamethylendiamin, Dimethylamino-N-methyl-ethanolamin, N-Methylimidazol, N-(3-Aminopropyl)imidazol, N-(3-Aminopropyl)-2-Methylimidazol, 1-(2-Hydroxyethyl)imidazol, N-Formyl-N,N'-dimethylbutylendiamin, N-Dimethylaminoethylmorpholin, 3,3'-Bis-dimethylamino-di-n-propylamin und/oder 2,2'-Dipiperazin-diisopropylether, Dimethylpiperazin, N,N'-Bis-(3-aminopropyl)-ethylendiamin und/oder Tris-(N,N-dimethylaminopropyl)-s-hexahydrotriazin, oder Mischungen enthaltend mindestens zwei der genannten Amine, wobei auch höhermolekulare tertiäre Amine, wie sie beispielsweise in DE-A 28 12 256 beschrieben sind, möglich sind. Des weiteren können als Katalysatoren für diesen Zweck übliche organische Metallverbindungen eingesetzt werden, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat. Bevorzugt können tertiäre aliphatische und/oder cycloaliphatische Amine in den Mischungen in den Mischungen enthalten sein, besonders bevorzugt Triethylendiamin.

Als Treibmittel können gegebenenfalls, bevorzugt zur Herstellung von geschäumten Polyurethanen, allgemein bekannte Treibmittel, wie z.B. Stoffe, die einen Siedepunkt unter Normaldruck im Bereich von -40°C bis 120°C besitzen, Gase und/oder feste Treibmittel und/oder Wasser in üblichen Mengen eingesetzt werden, beispielsweise Kohlendioxid, Alkane und oder Cycloalkane wie beispielsweise Isobutan, Propan, n- oder iso-Butan, n-Pentan und Cyclopentan, Ether wie beispielsweise Diethylether, Methylisobutylether und Dimethylether, Stickstoff, Sauerstoff, Helium, Argon, Lachgas, halogenierte Kohlenwasserstoffe und/oder teilhalogenierte Kohlenwasserstoffe wie beispielsweise Trifluormethan, Monochlortrifluorethan, Difluorethan, Pentafluorethan, Tetrafluorethan oder Mischungen, die mindestens zwei der beispielhaft genannten Treibmittel enthalten.

Als Hilfsmittel und/oder Zusatzstoffe seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen genannt.

Üblicherweise werden die organischen Polyisocyanate und die gegenüber Isocyanaten reaktiven Verbindungen mit einem Molekulargewicht von 60 bis 10000 g/mol in solchen Mengen zur Umsetzung gebracht, daß das Äquivalenzverhältnis von NCO-Gruppen der Polyisocyanate zur Summe der reaktiven Wasserstoffatome der gegenüber Isocyanaten reaktiven Verbindungen 0,5 bis 5 : 1 vorzugsweise 0,9 bis 3 : 1 und insbesondere 0,95 bis 2 : 1 beträgt.

Gegebenenfalls kann es von Vorteil sein, daß die Polyurethane zumindest teilweise Isocyanuratgruppen gebunden enthalten. In diesen Fällen kann ein Verhältnis von NCO-Gruppen der Polyisocyanate zur Summe der reaktiven Wasserstoffatome von 1,5 bis 60 : 1, vorzugsweise 1,5 bis 8 : 1 bevorzugt gewählt werden.

Die Polyisocyanat-Polyadditionsprodukte können beispielsweise nach dem one-shot Verfahren, oder dem bekannten Prepolymer-Verfahren hergestellt werden, beispielsweise mit Hilfe der Hochdruck- oder Niederdruck-Technik in offenen oder geschlossenen Formwerkzeugen, Reaktionsextrudern oder Bandanlagen. Die Polyurethanweichschaumstoffe werden bevorzugt nach dem one-shot-Verfahren hergestellt.

Als vorteilhaft hat es sich erwiesen, die Polyisocyanat-Polyadditionsprodukte nach dem Zweikomponentenverfahren herzustellen und die gegenüber Isocyanaten reaktiven Verbindungen und gegebenenfalls die Katalysatoren, Treibmittel und/oder Hilfs- und/oder Zusatzstoffe in der A-Komponente zu vereinigen und als B-Komponente die Isocyanate und Katalysatoren und/oder Treibmittel einzusetzen. Die Inhibitoren können in der A- und/oder B-Komponente beziehungsweise in den Bestandteilen dieser Komponenten verwendet werden, bevorzugt in der A-Komponente oder Bestandteilen der A-Komponente.

Die Erfindung soll anhand der folgenden Beispiele dargestellt werden.

### Beispiele:

Um Bedingungen, wie sie bei oben erwähnten Spezialanwendungen vorkommen können, zu simulieren, wurde mit Proben nachfolgend genannter Weichschaumstoffe eine Feuchtwärmealterung durchgeführt. Hierzu wurden jeweils Probewürfel mit der Kantenlänge 3 cm bei 90°C und 90 % rel. Luftfeuchtigkeit für 72 Stunden im Klimaschrank gealtert. Unter diesen Bedingungen kann es zu einer hydrolytischen Spaltung von Urethan- und Harnstoffbindungen kommen. Dies führt nicht nur zu einer drastischen Verschlechterung der mechanischen Eigenschaften, sondern auch zur Bildung aromatischer Amine.

Die Extraktion der aromatischen Amine wurde mittels einer von Prof. Skarping, Universität Lund, entwickelten Methode durchgeführt. Hierzu wird der Schaum mit 10 ml Essigsäure (w = 1 Gew.-%) 10 mal ausgequetscht. Die Essigsäure wurde bei zusammengedrückter Schaumprobe in einen 50-ml-Meßkolben überführt. Der Vorgang wird zweimal wiederholt und der Meßkolben anschließend bis zur Meßmarke mit Essigsäure aufgefüllt. Anschließend wurde der MDA-Gehalt der vereinigten Extrakte mittels Kapillarelektrophorese mit UV-Detektion (Gerät: Biofocus 3000, Vergleich mit Imidazol als internem Standard) bestimmt. Die in den Beispielen angegebenen MDA-Gehalte entsprechen den Absolutgehalten des gebildeten MDA im PUR-Schaum.

### Beispiel 1

Hurstellung eines Polyurethan-Weichschaumstoffes durch Vermischen von 750 g A-Komponente (Polyolkomponenten) mit 360 g B-Komponente (Isocyanatkomponente) (Index 90) und Überführen des aufschäumenden Gemisches in eine auf 53°C temperierte Aluminiumform (40 x 40 x 10 cm), wobei sich die Komponenten folgendermaßen aufbauen:

### A-Komponente:

97 Gew.-Teile eines Polyols mit der OHZ 28, einer mittleren Funktionalität von 2,3 und einem EO/PO Verhältnis von 14/86
3 Gew.-Teile eines Polyols mit der OHZ 42, einer mittleren Funktionalität von 3 und einem PO/EO Verhältnis von 30/70
3,31 Gew.-Teile Wasser
0,8 Gew.-Teile Aminopropylimidazol
0,6 Gew.-Teile 2-(2-Dimethylaminoethoxy)ethanol
0,5 Gew.-Teile Tegostab B 8631(Goldschmidt)

### B-Komponente

Mischung aus 42 Gew.-% Polymer-MDI, 47 Gew.-% eines Gemisches von 2;4'-MDI und 4,4'-MDI im Verhältnis 1:1 sowie 11 Gew.-% reinem 4,4'-MDI.

| | **4,4'-MDA** **[mg/kg Schaum]** | **2,4'-MDA** **[mg/kg Schaum]** |
|---|---|---|
| **Beispiel 1 o.L.** | < 1 | < 1 |
| **Beispiel 1 m.L.** | 497 | 687 |
| o.L.: ohne Feucht-Wärmelagerung m.L.: nach Feucht-Wärmelagerung | | |

### Beispiel 2

Herstellung eines Polyurethan-Weichschaumstoffes in Analogie zu 1) mit dem Unterschied, daß die B-Komponente 7,1 g 2-Phenyl-4H-3,1-Benzoxazin-4-on enthielt.

| | **4,4'-MDA** **[mg/kg Schaum]** | **2,4'-MDA** **[mg/kg Schaum]** |
|---|---|---|
| **Beispiel 2 o.L.** | < 1 | < 1 |
| **Beispiel 2 m.L.** | 64 | 149 |
| o.L: ohne Feucht-Wärmelagerung m.L.: nach Feucht-Wärmelagerung | | |

### Beispiel 3

Herstellung eines Polyurethan-Weichschaumstoffes in Analogie zu 1) mit dem Unterschied, daß die B-Komponente 7,1 g 5-Chlor-2-Phenyl-4H-3,1-Benzoxazin-4-on enthielt.

| | **4,4'-MDA** **[mg/kg Schaum]** | **2,4'-MDA** **[mg/kg Schaum]** |
|---|---|---|
| **Beispiel 3 o.L.** | < 1 | < 1 |
| **Beispiel 4 m.L.** | 60 | 144 |
| o.L: ohne Feucht-Wärmelagerung m.L.: nach Feucht-Wärmelagerung | | |

### Beispiel 4

Herstellung eines Polyurethan-Weichschaumstoffes in Analogie zu 1) mit dem Unterschied, daß die B-Komponente 7,1 g 2-Methyl-4H-3,1-Benzoxazin-4-on enthielt.

| | **4,4'-MDA** **[mg/kg Schaum]** | **2,4'-MDA** **[mg/kg Schaum]** |
|---|---|---|
| **Beispiel 4 o.L.** | < 1 | < 1 |
| **Beispiel 4 m.L.** | 75 | 173 |
| o.L: ohne Feucht-Wärmelagerung m.L.: nach Feucht-Wärmelagerung | | |

### Beispiel 5

Herstellung eines Polyurethan-Weichschaumstoffes durch Vermischen von 750 g A-Komponente (Polyolkomponenten) mit 350 g B-Komponente (Isocyanatkomponente) (Index 90) und Überführen des aufschäumenden Gemisches in eine auf 53 °C temperierte Aluminiumform (40 x 40 x 10 cm), wobei sich die Komponenten folgendermaßen aufbauen:

### A-Komponente:

97 Gew.-Teile eines Polyols mit der OHZ 28, einer mittleren Funktionalität von 2,3 und einem EO/PO Verhältnis von 14/86
3 Gew.-Teile eines Polyols mit der OHZ 42, einer mittleren Funktionalität von 3 und einem PO/EO Verhältnis von 30/70
3,31 Gew.-Teile Wasser
0,8 Gew.-Teile Triethylendiamin
0,6 Gew.-Teile Bis(dimethylaminoethyl)ether, 70 %-ig in Dipropylenglykol
0,5 Gew.-Teile Tegostab B 8631 (Goldschmidt)

### B-Komponente

Mischung aus 42 Gew.-% Polymer-MDI, 47 Gew.-% eines Gemisches von 2,4'-MDI und 4,4'-MDI im Verhältnis 1:1 sowie 11 Gew.-% reinem 4,4'-MDI.

| | **4,4'-MDA** **[mg/kg Schaum]** | **2,4'-MDA** **[mg/kg Schaum]** |
|---|---|---|
| **Beispiel 5 o.L.** | < 1 | < 1 |
| **Beispiel 5 m.L.** | 32 | 78 |
| o.L: ohne Feucht-Wärmelagerung m.L.: nach Feucht-Wärmelagerung | | |

### Beispiel 6

Herstellung eines Polyurethan-Weichschaumstoffes in Analogie zu 5) mit dem Unterschied, daß die B-Komponente 7,1 g 2-Phenyl-4H-3,1-Benzoxazin-4-on enthielt.

| | **4,4'-MDA** **[mg/kg Schaum]** | **2,4'-MDA** **[mg/kg Schaum]** |
|---|---|---|
| **Beispiel 6 o.L.** | < 1 | < 1 |
| **Beispiel 6 m.L.** | 26 | 66 |
| o.L: ohne Feucht-Wärmelagerung m.L.: nach Feucht-Wärmelagerung | | |

### Beispiel 7

Herstellung eines Polyurethan-Weichschaumstoffes in Analogie zu 5) mit dem Unterschied, daß die B-Komponente 7,1 g 5-Chlor-2-Phenyl-4H-3,1-Benzoxazin-4-on enthielt.

| | **4,4'-MDA** **[mg/kg Schaum]** | **2,4'-MDA** **[mg/kg Schaum]** |
|---|---|---|
| **Beispiel 7 o.L.** | < 1 | < 1 |
| **Beispiel 7 m.L.** | 24 | 61 |
| o.L: ohne Feucht-Wärmelagerung m.L.: nach Feucht-Wärmelagerung | | |

### Beispiel 8

Herstellung eines Polyurethan-Weichschaumstoffes in Analogie zu 5) mit dem Unterschied, daß die B-Komponente 7,1 g 2-Methyl-4H-3,1-Benzoxazin-4-on enthielt.

| | **4,4'-MDA** **[mg/kg Schaum]** | **2,4'-MDA** **[mg/kg Schaum]** |
|---|---|---|
| **Beispiel 8 o.L.** | < 1 | < 1 |
| **Beispiel 8 m.L.** | 21 | 56 |
| o.L: ohne Feucht-Wärmelagerung m.L.: nach Feucht-Wärmelagerung | | |

## Patentansprüche

1. Polyurethanweichschaumstoffe mit einer Dichte von 15 bis 150 kg/m³ enthaltend zyklische Iminoester.

2. Polyurethanweichschaumstoffe gemäß Anspruch 1 enthaltend als zyklische Iminoester Verbindungen, die folgende Struktureinheit aufweisen:

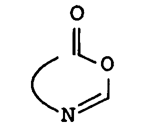

3. Polyurethanweichschaumstoffe gemäß Anspruch 1 enthaltend als zyklische Iminoester Benzoxazinonderivate.

4. Polyurethanweichschaumstoffe gemäß Anspruch 1 enthaltend als zyklische Iminoester mindestens eine der folgenden Verbindungen: 2-Phenyl-4H-3,1-Benzoxazin-4-on, 2-Methyl- 4H-3,1-Benzoxazin-4-on und/oder 5-Chlor-2-Phenyl-4H-3,1-Benzoxazin-4-on.

5. Polyurethanweichschaumstoffe gemäß einem der Ansprüche 1 bis 4 enthaltend die zyklischen Iminoester in einer Menge von 0,01 bis 5 Gew.-%, bezogen auf das Gewicht des Polyisocyanat-Polyadditionsprodukts.

6. Matratzen oder Polsterungen für Möbel, Automobilsitze und -lehnen oder Teppiche auf der Basis von Polyurethanweichschaumstoffen gemäß Anspruch 1.

## Claims

1. A flexible polyurethane foam having a density of from 15 to 150 kg/m³ and comprising a cyclic iminoester.

2. A flexible polyurethane foam as claimed in claim 1, comprising, as the cyclic iminoester, a compound having the following structural unit:

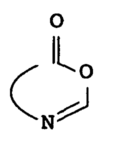

3. A flexible polyurethane foam as claimed in claim 1, comprising a benzoxazinone derivative as the cyclic iminoester.

4. A flexible polyurethane foam as claimed in claim 1, comprising, as the cyclic iminoester at least one of the following compounds: 2-phenyl-4H-3,1-benzoxazin-4-one, 2-methyl-4H-3,1-benzoxazin-4-one and/or 5-chloro-2-phenyl-4H-3,1-benzoxazin-4-one.

5. A flexible polyurethane foam as claimed in any of claims 1 to 4, comprising the cyclic iminoester in an amount of from 0.01 to 5% by weight, based on the weight of the polyisocyanate polyadduct.

6. A mattress or cushioning for furniture, automobile seats and automobile rests or carpets based on a flexible polyurethane foam as claimed in claim 7.

## Revendications

1. Mousses souples de polyuréthanne présentant une densité de 15 à 150 kg/m³ et contenant des iminoesters cycliques.

2. Mousses souples de polyuréthanne suivant la revendication 1, contenant, comme iminoesters cycliques, des composés qui présentent l'unité structurelle suivante :

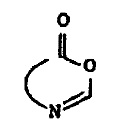

3. Mousses souples de polyuréthanne suivant la revendication 1, contenant, comme iminoesters cycliques, des dérivés de benzoxazinone.

4. Mousses souples de polyuréthanne suivant la revendication 1, contenant, comme iminoesters cycliques, au moins un des composés suivants : de la 2-phényl-4H-3,1-benzoxazin-4-one, de la 2-méthyl-4H-3,1-benzoxazin-4-one et/ou de la 5-chloro-2-phényl-4H-3,1-benzoxazin-4-one.

5. Mousses souples de polyuréthanne suivant l'une des revendications 1 à 4, contenant les iminoesters cycliques en une quantité de 0,01 à 5% en poids, par rapport au poids du produit de polyaddition de polyisocyanate.

6. Matelas ou capitonnages pour meubles, sièges et dossiers d'automobile ou tapis à base de mousses souples de polyuréthanne suivant la revendication 1.
